# EUROPÄISCHE PATENTANMELDUNG

(11) **EP 3 240 213 A1**
(43) Veröffentlichungstag der Anmeldung: **01.11.2017**
(21) Anmeldenummer: 17167016.9
(22) Anmeldetag: 19.04.2017
(51) Int. Cl.: H04J 3/06, H04L 12/40, G05B 19/00

(54) **GERÄT ZUR SYNCHRONISATION ÜBER EINE ETHERNETSCHNITTSTELLE**

(30) Priorität: 25.04.2016 DE 102016107629
(71) Anmelder: Schaffner International AG, 4542 Luterbach (CH)
(72) Erfinder: Zaccaria, Alfonso, 68219 Mannheim-Rheinau (DE)
(74) Vertreter: P&TS SA (AG, Ltd.)

(57) **Zusammenfassung**

Gerät aufweisend eine Ethernetschnittstelle mit einer theoretischen Übertragungsgeschwindigkeit von 100 Mbit/s oder schneller; ein Kommunikationssteuermittel zum zyklischen Kommunizieren von Synchronisierungssignalen und Steuerbefehlen über die Ethernetschnittstelle; und ein Synchronisierungsmittel zur Synchronisierung des Geräts mit einem weiteren Gerät auf der Basis der zyklisch kommunizierten Synchronisierungssignale, wobei das Übertragungsformat, das in der Ethernetschnittstelle für die zyklische Kommunikation der Synchronisierungssignale und der Steuerbefehle verwendet wird, ein Übertragungspaket mit einer Größe kleiner 35 Bytes aufweist.

## Beschreibung

### Technisches Gebiet

Die Erfindung bezieht sich auf ein Gerät zur Synchronisation über eine Ethernetschnittstelle.

### Stand der Technik

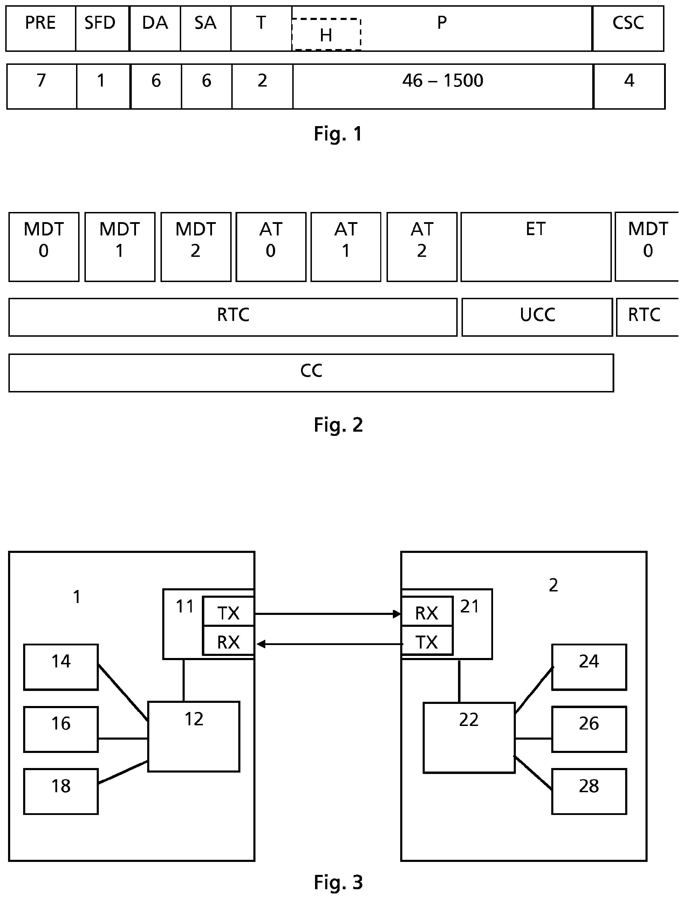

Aus dem Stand der Technik sind Ethernet-Verbindungen bekannt. Ethernet ist ein Standard, der sowohl Kabel- und Steckertypen als auch ein Übertragungsformat als auch Übertragungstechniken festlegt. Der Standard ist in IEEE 802.3 definiert. Durch die weite Verbreitung des Standards ist die Hardware (Stecker, Kabel, Steckdosen und Übertragungschips) z.B. für 100-Mbit/s-Ethernet-Verbindungen (Fast Ethernet) mit guten Übertragungsraten (2 x 31,25 MHz) zu günstigen Kosten erhältlich. Fig. 1 zeigt das Standardformat für einen Ethernet-Frame.

Der Ethernet-Frame in der OSI-Schicht 2 (MAC Layer) enthält eine MAC Zieladresse DA und eine MAC Herkunftsadresse SA mit jeweils 6 Bytes, ein Ethernet-Typ-Feld T mit zwei Bytes, ein Datenfeld P mit den zu übertragenen Daten und einer variablen Größe von mindestens 46 Bytes und maximal 1500 Bytes und ein Prüfsummenfeld FCS mit 4 Bytes. Der Ethernet-Frame der OSI-Schicht 2 ist somit mindestens 64 Byte lang. Die MAC Adressen DA und SA sorgen dafür, dass der Empfänger weiß, dass der Ethernet-Frame für Ihn bestimmt ist und von welchem Sender er kommt. Das Ethernet-Typ-Feld T gibt das Datenformat der höheren OSI-Schichten an, welches für die in P übertragenen Daten verwendet wurde, z.B. IPv4. Je nach Übertragungsformat enthält das Datenfeld P noch ein Headerfeld H. Die Prüfsumme berechnet eine 32-Bit Prüfsumme des Ethernet-Frame von DA bis P zur Überprüfung der empfangenen Daten.

In der OSI-Schicht 1 (Physische Schicht PHYS) wird der Ethernet-Frame durch eine Präambel PRE und einen Startframebegrenzer SFD zu einem Ethernet-Paket ergänzt. Ein Ethernet-Paket hat somit mindestens 82 Bytes. Die Größe des Ethernet-Pakets wird zusätzlich vergrößert, da zwischen zwei Ethernet-Paketen ein Zwischenpaketbegrenzer (IPG) eingeschoben werden muss, der bei Fast Ethernet weitere 12 Bytes beträgt. Somit brauchen ein Ethernet-Paket und der nachfolgende Zwischenpaketbegrenzer für die Übertragung mit Fast Ethernet mindestens 7,5 µs.

In vielen Anwendungen ist die Synchronisation von Geräten in Echtzeit von hoher Bedeutung. Dies wurde früher durch Bussysteme realisiert. Heutzutage werden immer mehr Anwendungen durch Ethernet-Verbindungen synchronisiert. Dafür gibt es speziell entwickelte Echtzeit-Ethernet-Formate. SERCOS III ist ein solches Echtzeit-Ethernet-Format, welches in Fig. 2 gezeigt ist. Der Kommunikationskanal ist in Kommunikationszyklen CC mit der Länge der Synchronisationsperiode aufgeteilt. Der Kommunikationskanal in einem Kommunikationszyklus CC enthält einen Echtzeitkanal RTC und einen Nutzdatenkanal UCC. In dem Echtzeitkanal RTC werden die Mastertelegramme MDT0, MDT1, MDT2 für verschiedene Synchronisierungssteilnehmer 0, 1 und 2 und deren Bestätigungen AT0, AT1, AT2 übertragen. In dem Nutzdatenkanal UCC können beliebige Ethernet-Pakete übertragen werden. Die Mastertelegramme und die Bestätigungstelegramme sind ebenfalls Ethernet-Pakete, deren Ethernet-Typ-Feld T das Echtzeit-Ethernet SERCOS III Format festlegt. Das erste Mastertelegram eines Kommunikationszyklus enthält zu Beginn des Datenfelds einen Marker MST, der zur Synchronisierung der Geräte verwendet wird, da dieser in äquidistanten Zeitabständen (Dauer des Kommunikationszyklus) wiederholt werden. Nach dem Marker MST kommen dann die entsprechenden Kontrolldaten für die synchronisierten Geräte. Allerdings sind mit SERCOS III nur Zykluszeiten von bis zu 31,25 µs erreichen. Auch die Zykluszeiten von anderen Echtzeit-Ethernet-Formaten sind begrenzt.

Es gibt weitere Synchronisierungsverfahren mit schnelleren Zykluszeiten. Allerdings basieren diese nicht mehr auf Ethernet und sind aufgrund der kleinen Stückzahlen teuer und aufwendig.

### Darstellung der Erfindung

Es ist ein Ziel der Erfindung, eine einfache Synchronisierungsverbindung zu schaffen, die sehr kleine Zykluszeiten erreicht.

Erfindungsgemäß wird dieses Ziel mit einem Gerät mit den folgenden Merkmalen erreicht. Das Gerät weist eine Ethernetschnittstelle mit einer theoretischen Übertragungsgeschwindigkeit von 100 Mbit/s oder schneller, ein Kommunikationssteuermittel zum zyklischen Kommunizieren von Synchronisierungssignalen und Steuerbefehlen über die Ethernetschnittstelle und ein Synchronisierungsmittel zur Synchronisierung des Geräts mit einem weiteren Gerät auf der Basis der zyklisch kommunizierten Synchronisierungssignale auf.

Erfindungsgemäß wird dieses Ziel ebenfalls mit einem Master-Slave-System mit einem oben beschriebenen Master-Gerät und mit mindestens einem der oben beschriebenen Slave-Geräte erreicht, wobei das Slave-Gerät über die Ethernet-Schnittstelle die Synchronisierungssignale des Master-Geräts zur Synchronisierung mit dem Master-Gerät empfängt und das mindestens eine Slave-Gerät auf das Master-Gerät synchronisiert und synchron mit dem Master-Gerät ansteuert.

In einem Ausführungsbeispiel weist das Übertragungsformat, das in der Ethernetschnittstelle für die zyklische Kommunikation der Synchronisierungssignale und der Steuerbefehle verwendet wird, ein Übertragungspaket kleiner als die 82 Byte des standardkonformen Ethernet-Pakets auf. Dieser Bruch mit dem Ethernet-Standard erlaubt die Zykluszeiten kleiner zu machen als die notwendige Zeit, die für die Übertragung eines minimalen standardkonformen Ethernetpakets von 82 Bytes notwendig ist. Insbesondere wenn diese Größe des Übertragungspakets auf kleiner gleich 34 Byte verkleinert wird, kann man die Zykluszeit signifikant verkleinern bzw., falls mehrere Geräte in dem gleichen Kabel synchronisiert werden, die Anzahl der Geräte erhöhen. Als ein besonders vorteilhafter Kompromiss zwischen zu übertragenen Steuerdaten und kurzen Zykluszeiten hat sich eine Übertragungspaketgröße von 18 Byte ergeben.

In einem Ausführungsbeispiel weist das Übertragungsformat, das in der Ethernetschnittstelle für die zyklische Kommunikation der Synchronisierungssignale und der Steuerbefehle verwendet wird, ein Übertragungspaket, das keine MAC Ziel- und Ursprungsadresse enthält, auf. Dadurch lässt sich das Übertragungspaket verkleinern und die Zykluszeit verkürzen. Es gibt verschiedene Möglichkeiten, dass die MAC Ziel- und Ursprungsadresse weggelassen werden kann, welche auch kombiniert werden können. Die Übertragungspakete von Master zu dem/den Slave(s) und die Übertragungspakete von dem/den Slave(s) zu dem Master werden in einem Full-Duplex-Modus in die zwei getrennten Kanäle der physischen Ethernetschnittstelle aufgeteilt. Das heißt, jeder Kanal ist für eine Richtung zuständig. Alternativ ist aber auch ein Zeitmultiplex (TDMA) Verfahren möglich, um die beiden Richtungen zu trennen. Falls mehrere Slaves synchronisiert werden müssen, kann durch ein Zeitmultiplex oder eine Sternanordnung eine eindeutige Zuordnung eines Pakets zu einem Slave realisiert werden.

In einem Ausführungsbeispiel wird das Taktsignal des Slave-Geräts auf der physischen Schicht (OSI Schicht 1) durch einen Phasenregelkreis mit einem analogen Signal eines von dem Master-Gerät empfangenen Übertragungspakets synchronisiert. Vorzugsweise handelt es sich hierbei um das Data-Valid-Signal. Im Stand der Technik wird die Synchronisierung auf der Basis eines Synchronisierungsmarkers in dem Übertragungspaket auf einer höheren OSI Schicht durchgeführt. Dadurch muss das Übertragungspaket erst dekodiert werden und kann erst dann zur Synchronisierung verwendet werden. Durch die Synchronisierung in der physischen Schicht auf der Basis eines analogen Signals des Übertragungssignals kann die Synchronisierung ohne zeitliche Verzögerung durchgeführt werden.

In einem Ausführungsbeispiel weist das Übertragungsformat, das in der Ethernetschnittstelle für die zyklische Kommunikation der Synchronisierungssignale und der Steuerbefehle verwendet wird, ein Übertragungspaket auf, das ein Feld für eine virtuelle Datenverbindung aufweist, wobei das Gerät einen virtuelle Datenverbindungsschnittstelle zum Eingeben und/oder Ausgeben von Daten im Protokollformat von UART, SPI oder I2C aufweist. Das Kommunikationssteuermittel und die virtuelle Datenverbindungsschnittstelle zusammen sind ausgebildet, die an der virtuellen Datenverbindungsschnittstelle eingegebenen Daten aus dem UART, SPI oder I2C Protokollformat auszulesen und in das Feld für die virtuelle Datenverbindung aufeinanderfolgender Übertragungspakete zu schreiben, und/oder Daten des Felds für die virtuelle Datenverbindung der an der Ethernetschnittstelle empfangenen Übertragungspakete auszulesen und die ausgelesenen Daten an der virtuelle Datenverbindungsschnittstelle im UART, SPI oder I2C Protokollformat auszugeben. UART, SPI oder I2C sind serielle Schnittstellen, die bei der Ansteuerung von Geräten wegen der sehr einfachen Verarbeitung weit verbreitet sind. Allerdings ist die physische Verbindungstechnologie oft langsam. Durch die Verwendung einer Schnittstelle, die zu den höheren OSI Schichten wie eine UART, SPI oder I2C Schnittstelle (Host Controller) wirkt und die Transformation der erhaltenen Daten in das Feld des Übertragungspakets für die virtuelle Datenverbindung, können die UART, SPI oder I2C-Daten zusammen mit anderen Daten des Übertragungspakets über die schnelle Ethernetschnittstelle verschickt werden. Somit muss nur eine Kabelverbindung zwischen den kommunizierenden Geräten hergestellt werden, obwohl zwei verschiedene Kommunikationsprotokolle angeboten werden. Auch wenn in dem Übertragungspaket nur 1 Byte in einem Übertragungspaket der Größe von 18 Byte für die virtuelle Datenverbindung gesichert wird, ist die Übertragungsgeschwindigkeit höher als für klassische UART, SPI oder I2C Schnittstellen. Dieses Ausführungsbeispiel ist insbesondere für die oben beschriebene Synchronisationsanwendung mit kleinen Übertragungspaketen vorteilhaft, kann aber auch ohne die oben beschriebenen Synchronisationsmittel und Steuerbefehle Anwendung finden.

In einem Ausführungsbeispiel weist das Master-Slave-System mindestens zwei Energieausgabegeräte zur Ausgabe elektrischer Energie auf, wobei die Ausgabe der elektrischen Energie der mindestens zwei Energieausgabegeräte auf einen gemeinsamen Ausgang von dem Master-Gerät in Synchronität mit dem Master-Gerät gesteuert wird. Dabei können die mindestens zwei Energieausgabegeräte durch das Master-Gerät und mindestens ein Slave-Gerät oder durch mindestens zwei Slave-Geräte realisiert sein. Durch eine solche Anordnung lässt sich zum Beispiel ein aktiver Filter für hohe zu kompensierende Störströme realisieren. Ein solcher aktiver Filter misst Störströme und steuert die Ausgabe der mindestens zwei Energieausgabegeräte synchron mit dem Mastergerät so, dass die Gesamtausgabe der mindestens zwei Energieausgabegeräte die gemessenen Störströme kompensiert. Für solche Anwendungen, insbesondere für die Kompensation hoher Störfrequenzen, sind sehr kurze Zykluszeiten für die Synchronisation notwendig. Deshalb ist diese Anwendung besonders vorteilhaft in Kombination mit den anderen Ausführungsbeispielen zur Reduktion der Zykluszeiten der Synchronisation.

Insbesondere die Kombination bzw. die Unterkombinationen dieser Ausführungsbeispiele sind besonders vorteilhaft.

### Kurze Beschreibung der Figuren

Die Erfindung wird anhand der beigefügten Figuren näher erläutert, wobei zeigen
- **Fig. 1**: eine Darstellung des Datenformats eines Ethernet-Pakets nach dem Stand der Technik.
- **Fig. 2**: eine Darstellung eines Datenstroms des Echtzeit-Ethernet Standards SERCOS III aus dem Stand der Technik.
- **Fig. 3**: eine Darstellung eines Master-Slave-Systems mit einem Slave-Gerät und einem Master-Gerät.
- **Fig. 4**: eine Darstellung des Datenstroms zwischen einem Slave-Gerät und einem Master-Gerät.
- **Fig. 5**: eine Darstellung eines Beispiels eines neuen Übertragungspakets für eine Ethernet-Schnittstelle in dem Master-Slave-System.
- **Fig. 6**: eine Darstellung eines Master-Slave-Systems mit zwei Slave-Geräten und einem Master-Gerät in einer Line-Anordnung.
- **Fig. 7**: eine Darstellung es Datenstroms zwischen den zwei Slave-Geräten und dem Master-Gerät in einer Line- oder Kreisanordnung.
- **Fig. 8**: eine Darstellung eines Master-Slave-Systems mit vier Slave-Geräten und einem Master-Gerät in einer Stern-Anordnung.
- **Fig. 9**: Anwendung eines Master-Slave-Systems zwischen einer Stromversorgung und einer Last.
- **Fig. 10**: Aktiver Filter realisiert durch ein Master-Slave-System mit einem Master und einem Slave-Gerät.
- **Fig. 11**: Aktiver Filter realisiert durch ein Master-Slave-System mit einem Master und vier Slave-Geräten.

### Wege zur Ausführung der Erfindung

Der Begriff "Kommunizieren" soll im Rahmen dieser Erfindung entweder nur das Senden oder nur das Empfangen oder das Senden und das Empfangen umfassen.

Der Begriff "Frame" wird im Rahmen dieser Erfindung als eine von der OSI-Schicht 2 vorgegebene Übertragungseinheit verwendet. Im Beispiel eines Ethernet-Frames ist das der im Stand der Technik beschriebene mindestens 64 Byte lange Frame. Der Begriff "Paket" hingegen wird als eine von der OSI-Schicht 1 vorgesehene Übertragungseinheit angesehen, die mit der physischen Ethernetschnittstelle übertragen oder empfangen (kommuniziert) wird. Das "Paket" beinhaltet dabei den "Frame" und die für die Übertragung notwendigen zusätzlichen Datenfelder, wie im Falle des Standard Ethernet-Pakets den Ethernet-Frame, die Präambel von 7 Bytes und den Start-of-Frame-Delimiter (SFD) von 1 Byte oder wie im nachfolgenden Beispiel der Start-of-Stream-Delimiter (SSD). Ein Inter-Packet-Gap (IGP) oder ein End-of-Stream-Delimter (ESD) sollen nicht mehr als zu einem "Paket" gehörend definiert werden. "Pakete" werden im Rahmen von Echtzeitprotokollen auch oft als Telegramme bezeichnet.

Fig. 3 zeigt ein Ausführungsbeispiel eines Master-Slave-Systems mit einem Master-Gerät 1 und einem Slave-Gerät 2.

Das Master-Gerät 1 weist eine physikalische Ethernetschnittstelle 11, ein Kommunikationssteuermittel 12, ein Synchronisierungsmittel 14, ein Steuermittel 16 und eine virtuelle Datenverbindungsschnittstelle 18 auf. Das Master-Gerät 1 ist ausgebildet, dem Slave-Gerät 2 in zyklisch festen Zykluszeitabständen Synchronisierungssignale, die eine Synchronisierung des Slave-Geräts 2 mit dem Master-Gerät 1 erlauben, und Steuerbefehle, die eine mit dem Master-Gerät 1 synchrone Steuerung des Slave-Geräts 2 erlauben, zu schicken.

Das Slave-Gerät 2 weist eine physikalische Ethernetschnittstelle 21, ein Kommunikationssteuermittel 22, ein Synchronisierungsmittel 24, ein Steuermittel 26 und eine virtuelle Datenverbindungsschnittstelle 28 auf. Das Slave-Gerät 2 ist ausgebildet, von dem Master-Gerät 1 in zyklisch festen Zykluszeitabständen Synchronisierungssignale und Steuerbefehle zu empfangen, und das Slave-Gerät 2 auf der Basis der zyklisch empfangenen Synchronisierungssignale mit dem Master-Gerät 1 zu synchronisieren und das Slave-Gerät 2 in Abhängigkeit der zyklisch empfangenen Steuerbefehle synchron zu dem Master-Gerät 1 zu steuern.

Die Ethernetschnittstelle 11 und die Ethernetschnittstelle 21 sind jeweils physikalische Standard-Ethernetschnittstellen mit einer im Standard IEEE 802.3 definierten Übertragungstechnik. In anderen Worten heißt dies, dass die Hardware der Ethernetschnittstelle 11 und 21 ausgebildet ist, (bei standardgemäßer Ansteuerung) Signalisierungen nach dem Standard IEEE 802.3 auszusenden.

Vorzugsweise hat diese Ethernetschnittstelle 11 und 21 eine theoretische Übertragungsgeschwindigkeit von 100 Megabit/Sekunde (FastEthernet) oder schneller, wie z.B. 1000 Megabit/Sekunde (Gigabit-Ethernet), 10 Gigabit/Sekunde (10GbE). Als "theoretische Übertragungsgeschwindigkeit" wird die von dem Standard der physikalischen Ethernetschnittstelle angegebene Übertragungsgeschwindigkeit bezeichnet, z.B. 100 Megabit/Sekunde (Mbit/s) für FastEthernet, 1000 Mbit/s für Gigabit-Ethernet, etc.. Die realen Übertragungsraten können dabei auch unterhalb dieser nach dem Standard angegebenen Übertragungsraten liegen, oder die physikalische Ethernetschnittstelle kann mit einer niedrigeren Bitrate betrieben werden als die theoretisch mögliche. Eine Standard-FastEthernet-Schnittstelle lässt sich zum Beispiel nicht nur mit der Standardübertragungsfrequenz von 31,25 MHz, sondern auch mit 2MHz bzw. ganzen Vielfachen von 2 MHz bis zu 320 MHz übertragen. Die verwendete Übertragungsfrequenz liegt im Falle einer elektrischen Übertragung vorzugsweise bei 2 MHz oder höher, vorzugsweise bei 31,25 MHz oder höher.

Jede physikalische Ethernetschnittstelle weist eine Steckerbuchse für den Empfang eines Übertragungskabels auf. Diese Steckerbuchse ist vorzugsweise eine 8P8C-Steckerbuchse. Es kann sich aber auch um eine andere Steckerbuchse handeln, z.B. für optische Kabel. Die physikalischen Ethernetschnittstellen 11 und 21 sind vorzugsweise mit einem Kabel, vorzugsweise mit einem Ethernetkabel, verbunden. Vorzugsweise wird ein Kupferkabel verwendet, z.B. Cat-5, Cat-5e, Cat-6, oder höhere Cat-Klassen. Alternativ können aber auch andere Ethernetkabel, z.B. optische Ethernetkabel verwendet werden. Die physikalische Ethernetschnittstellen 11 und 21 und das diese verbindende Kabel stellen zwei Übertragungskanäle zur Verfügung, vorzugsweise einen für jede Richtung. Mit TX wird dabei der ausgehende Kanal und mit RX der eingehende Kanal der Ethernetschnittstellen 11 und 21 bezeichnet, wobei ein ausgehender Kanal TX einer Schnittstelle 11 oder 21 mit dem eingehenden Kanal RX der anderen Schnittstelle 21 oder 11 verbunden ist.

Das Kommunikationssteuermittel 12 und 22 ist ausgebildet, die entsprechende physikalische Ethernetschnittstelle 11 und 21 zu steuern. Insbesondere ist das Kommunikationssteuermittel 12 und 22 ausgebildet Übertragungspakete mit Synchronisierungssignalen und Steuerbefehlen über die entsprechende Ethernetschnittstelle 11 oder 21 mit dem später beschriebenen Übertragungsformat zu kommunizieren, das heißt zu senden und/oder zu empfangen.

Das Synchronisierungsmittel 14 des Master-Geräts 1 gibt einen Synchronisationstakt mit festen Zykluszeitabständen vor. Dieser wird an das Kommunikationssteuermittel 12 gegeben, so dass die Übertragungspakete mit den Synchronisierungssignalen entsprechend diesem Taktsignal zyklisch mit den festen Zykluszeitabständen an das Slave-Gerät 2 geschickt werden kann.

Das Synchronisierungsmittel 24 des Slave-Geräts 2 ermittelt aus den zyklisch empfangenen Übertragungspaketen das Synchronisierungssignal und synchronisiert das Slave-Gerät 2 zyklisch mit dem Master-Gerät 1.

Das Steuermittel 16 des Master-Geräts 1 erzeugt Steuerbefehle für die Steuerung des Slave-Geräts 2, welche an das Kommunikationssteuermittel 12 gegeben werden, so dass die Steuerbefehle (auch Steuerdaten) jedes Zyklus zusammen mit dem Synchronisierungssignal in dem entsprechenden Übertragungspaket an das Slave-Gerät 2 übertragen werden. Falls das Master-Gerät 1 auch über die Steuerung und Synchronisation noch weitere Funktionen ausführen muss, so steuert das Steuermittel 16 diese Funktionen synchron mit dem Taktsignal des Synchronisierungsmittels 12.

Das Steuermittel 26 des Slave-Geräts 2 erhält von dem Kommunikationssteuermittel 22 die aus dem zyklisch empfangenen Übertragungspaket ausgelesenen Steuerbefehle. Das Steuermittel 26 steuert auf der Basis dieser Steuerbefehle das Slave-Gerät 2 synchron mit dem Master-Gerät 1.

Die optionale virtuelle Verbindungsschnittstelle 18 ist ausgebildet, gegenüber höheren OSI-Schichten wie eine UART, SPI und/oder I2C zu wirken, so dass das Master-Gerät 1 aus der virtuellen Verbindungsschnittstelle 18 UART, SPI und/oder I2C Daten auslesen oder in die virtuellen Verbindungsschnittstelle 18 UART, SPI und/oder I2C Daten eingeben kann. Die eingegebenen UART, SPI und/oder I2C Daten werden an die Kommunikationssteuermittel 12 zur Übertragung über die Ethernetschnittstelle 11 gegeben. Die ausgegebenen UART, SPI und/oder I2C Daten werden von den Kommunikationssteuermittel 12 erhalten. Die virtuelle Verbindungsschnittstelle 28 in dem Slave-Gerät arbeitet analog.

Das Kommunikationssteuermittel 12 und 22 steuert die entsprechende Ethernetschnittstelle 11 oder 21 so an, dass das folgende Übertragungsformat oder -protokoll zwischen dem Master-Gerät 1 und dem Slave-Gerät 2 verwendet wird.

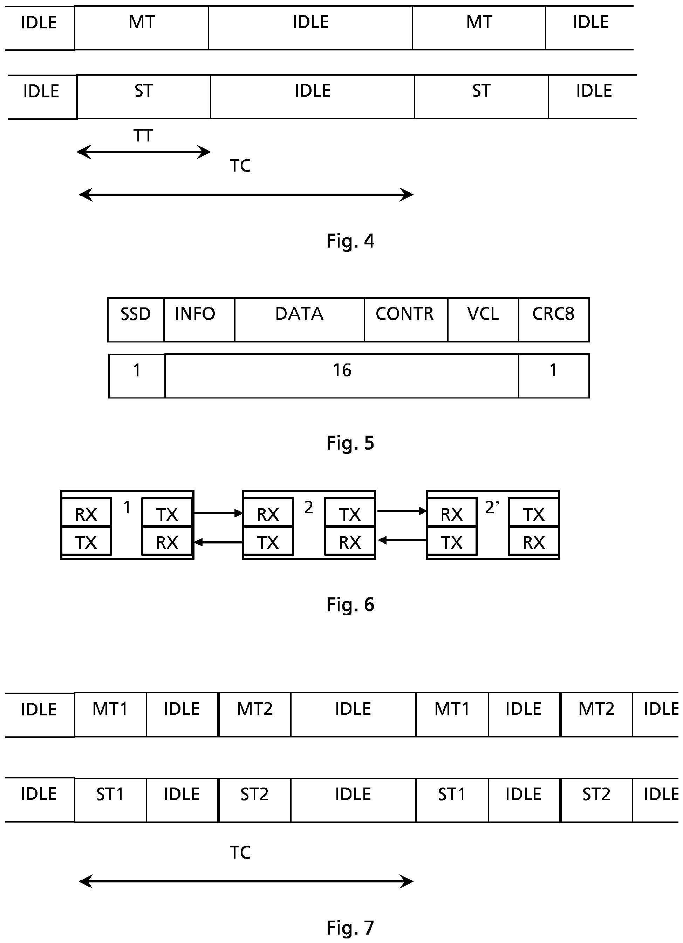

Fig. 4 zeigt zwei Datenströme zwischen den Ethernetschnittstellen 11 und 21 des Master-Geräts 1 und des Slave-Geräts 2. Die zwei Datenströme werden in zwei physikalischen Kanälen der Ethernetschnittstellen 11 und 21 übertragen. Der erste Datenstrom ist in einem ersten Kanal der Ethernetschnittstelle 11 und 21 von dem Master-Gerät zu dem Slave-Gerät und der zweite Datenstrom in dem zweiten Kanal der Ethernet-Schnittstelle von dem Slave-Gerät zu dem Master-Gerät angeordnet. Die von dem Master-Gerät an das Slave-Gerät übertragenen erfindungsgemäßen Übertragungspakete in dem ersten Kanal heißen auch Mastertelegramme MT und die von dem Slave-Gerät an das Master-Gerät übertragenen erfindungsgemäßen Übertragungspakete in dem zweiten Kanal heißen auch Slavetelegramme ST. Jedes Mastertelegramm wird von dem Master-Gerät 1 an das Slave-Gerät 2 nach jeweils dem festen Zykluszeitabstand TC zu jeweils festen Zeitpunkten abgesendet. Zwischen zwei Mastertelegrammen MT wird die Verbindung für die restliche Zykluszeit TC in einen Stand-by Modus, den sogenannten IDLE Modus, geschaltet. In dem IDLE Modus liegt ein IDLE Signal an der Schnittstelle an. Analog wird jedes Slavetelegramm ST von dem Slave-Gerät 2 an das Master-Gerät 1 nach jeweils dem festen Zykluszeitabstand TC zu jeweils festen Zeitpunkten abgesendet. Vorzugsweise werden die Mastertelegramme MT und die Slavetelegramme ST gleichzeitig verschickt, so dass die Mastertelegramme und die Slavetelegramme in gleichen Zeitschlitzen in den zwei parallelen Kanälen der Ethernetschnittstelle kommuniziert werden. Gleichzeitiges Verschicken soll in diesem Zusammenhang sowohl das gleichzeitige Absenden in dem Master-Gerät 1 und dem/den Slave-Gerät(en) 2 als auch das gleichzeitige Senden der Mastertelegramme MT mit dem Empfang des/der Slavetelegramms/e in dem Master-Gerät 1 bedeuten. In einem Ausführungsbeispiel könnte das Slave-Gerät 2 die Absendezeit so in Abhängigkeit der Telegrammlaufzeit in dem Kabel anpassen, dass das Slavetelegramm ST gleichzeitig mit der Absendezeit des Mastertelegramms MT am Master-Gerät 1 in dem Master-Gerät 1 ankommt. Zwischen zwei Mastertelegrammen MT bzw. zwischen zwei Slavetelegrammen ST wird die Verbindung für die restliche Zykluszeit TC in einen Stand-by Modus, den sogenannten IDLE Modus, geschaltet. In einem alternativen Ausführungsbeispiel können die Mastertelegramme MT und die Slavetelegramme ST nur teilweise zeitlich überlappen oder komplett zeitlich hintereinander folgend geschickt werden.

Während des IDLE Modus könnten theoretisch auch normale Ethernet-Pakete übertragen werden, wenn die IDLE-Zeit lang genug ist für die Übertragung eines solchen Ethernet-Paket bevor das nächste Mastertelegramm übertragen werden muss.

Fig. 5 zeigt nun ein besonders vorteilhaftes Beispiel eines Übertragungspakets eines erfindungsgemäß veränderten Übertragungsformats.

Das Übertragungspaket ist vorzugsweise kleiner als das minimale Übertragungspaket des Ethernetstandards von 82 Byte, vorzugsweise kleiner als 35 Byte. Fig. 3 zeigt einen besonders vorteilhaften Kompromiss zwischen Übertragungskapazität und Größe des Übertragungspakets von 18 Byte. Vorzugsweise bleibt die Grösse des zu zyklisch festen Zeiten übertragenen Master und/oder Slavetelegrams gleich (konstant oder fest).

Die Struktur des Übertragungspakets ist sehr einfach gehalten. Das Übertragungspaket besteht aus einem Übertragungsstromstartbegrenzer, auch Start-of-stream-delimiter oder SSD genannt, und einem Frame.

So wird die Präambel und der Framestartbegrenzer, auch Start-of-Frame-delimiter oder SFD genannt, welche zusammen 8 Bytes groß sind, durch einen Übertragungsstromstartbegrenzer ersetzt. Dieser ist vorzugsweise nur 1 Byte groß. Dies ist in der Regel ein J/K-Symbol, das auch im Ethernetstandard vor oder in dem ersten Übertragungspaket nach einem IDLE-Signal übertragen wird. Dies ist eine Art Einschaltsignal für die Datenverbindung. Somit wird direkt nach dem Einschalten der Datenverbindung mit dem SSD der Datenframe übertragen und der Overhead für die Datenübertragung notwendigen Bytes auf ein Minimum reduziert. Dies ist besonders vorteilhaft, da die Übertragungspakete nach einem IDLE-Signal versandt werden und so und so ein SSD geschickt werden muss. Somit wird der SSD sowohl als Kennzeichnung des beginnenden Datenstroms nach einem IDLE-Signal als auch als Kennzeichen des beginnenden Übertragungspakets verwendet.

Auch der Frame, oder nachfolgend auch Rahmenfeld genannt, wird radikal vereinfacht. Zwar weist der Frame in Fig. 3 ebenfalls ein geprüftes Feld und ein Prüffeld CRC8 mit einer Prüfsumme des geprüften Felds auf, aber vorzugsweise ist das Rahmenfeld kleiner als der Standardethernetrahmen, hier nur 17 Bytes. Anstatt eines Prüffelds von 4 Bytes wird nur ein Prüffeld von 1 Byte verwendet. Dies kann dadurch erreicht werden, dass anstatt einer 32-Bit Hash-summe, nur eine 8-Bit Hashsumme des geprüften Feldes in das Prüffeld CRC8 geschrieben wird. Das geprüfte Feld ist hier nur 16 Bytes lang. Somit hat man trotz eines sehr kleinen Übertragungspakets von 18 Bytes trotzdem ein ausreichend großes geprüftes Feld von 16 Byte, welches für zu übertragende Daten, z.B. Steuerbefehle, verwendet werden kann.

Desweiteren wurde in dem geprüften Feld die MAC Ziel- und Ursprungsadressen DA und SA weggelassen. Dies wird technisch möglich, da entweder an einer Ethernetschnittstelle nur ein weiteres Gerät verbunden ist (Master-Slave-Paar oder Sternanordnung von Master und Slaves) oder über die zeitliche Zuordnung des Übertragungspaket in einem Zeitschlitzmultiplexing (TDMA) zwischen verschiedenen Slave-Geräten eine eindeutige Zuordnung zwischen jedem Übertragungspaket zu einem Slave-Gerät geschaffen wird, so dass die MAC-Ziel- und Ursprungsadresse DA und SA in dem geprüften Feld überflüssig werden. Somit kann das Übertragungspaket ohne technische Nachteile weiter verkleinert werden. In einem besonders vorteilhaften Ausführungsbeispiel wird die physikalische Ethernet-Schnittstelle im Full-Duplex-Modus betrieben, so dass die Kommunikation der Übertragungspakete zwischen einem Slave- und einem Mastergerät in beide Richtungen gleichzeitig erfolgen kann.

Auch das Ethernet-Typ Feld wurde in dem geprüften Feld weggelassen, um das Übertragungspaket weiter zu verkleinern.

Stattdessen weist das geprüfte Feld ein Nutzdatenfeld DATA auf, in welchem die zyklisch übermittelten Steuerbefehle übertragen werden. In dem später beschriebenen Ausführungsbeispiel sind das zum Beispiel in den Mastertelegrammen die Größe der von dem Slavegerät auszugebenden elektrischen Leistung oder in den Slavetelegrammen die Größe der gemessenen ausgegebenen Leistung.

Das geprüfte Feld weist vorzugsweise weiterhin ein Informationsfeld INFO mit allgemeinen Informationen über das Übertragungspaket, z. B. das verwendete Übertragungsformat des Übertragungspakets, des Übertragungsframes oder des Datenfelds, die Art des Übertragungspaktes (Master, Slave oder anderes) und/oder die (digitalen) Synchronisierungssignale auf. Die Synchronisierungssignale können aber auch in anderen Feldern wie dem DATA Feld oder dem nachfolgend beschriebenen CONTR Feld übertragen werden.

Das Feld CONTR enthält anwendungsspezifische Steuerinformationen. Dieses Feld kann zum Beispiel ein Bit enthalten, welches die Aktivität des Slavegeräts ansteurt (Mastertelegramm) oder angibt (Slavetelegramm), z.B. an = 1 und aus = 0. Weitere Bits können für die Aktivität anderer Funktionen oder Zustände des Slavegeräts verwendet werden, z.B. ein Bit für einen Fehlerzustand des Slavegeräts. Ein weiterer Bit des CONTR-Feld gibt vorzugsweise an, ob die virtuelle Datenverbindung an oder ausgeschalten ist, so dass der Empfänger weiß, ob er das VCL Feld auswerten muss. Vorzugsweise werden für solche Steuerinformationen 1 Bit Felder (Flags) verwendet, allerdings könnten bei mehr als zwei Zuständen auch grössere Felder wie 2 Bit (vier Zustände), 3 Bit (acht Zustände), 4 Bit (16 Zustände) verwendet werden.

In einem anderen Ausführungsbeispiel wird die Synchronisierung des Slave-Geräts 2 mit dem Master-Gerät 1 auf der Basis eines Phasenregelkreises (PLL) in dem Slave-Gerät2 anhand eines empfangenen analogen Signalisierungssignals der Ethernet-Schnittstelle 21 durchgeführt. Vorzugsweise wird diese Synchronisierung auf der Basis des Data-Valid-Signals durchgeführt. Im Gegensatz zu einer digitalen Übertragung des Synchronisierungssignals in dem Übertragungspaket als Synchronisierungsdaten hat diese Lösung die folgenden Vorteile. Erstens wird die Übertragungskapazität des Übertragungspakets nicht durch Synchronisierungsdaten verkleinert. Zweitens kann die analoge Synchronisierung wesentlich schneller ohne die Dekodierung von Synchronisierungsdaten aus dem Übertragungspaket erfolgen und erhöht somit die Synchronisierungsqualität.

Das Data-Valid Signal ist vorzugsweise ein Data-Valid Signal nach dem Standard IEEE 802.3-2000 für "Carrier Sense Multiple Access with Collision Detection (CSMA/CD) Access Method and Physical Layer Specifications". Vorzugsweise ist das Data-Valid Signal (DV) ein Receive-Data-Valid Signal (Rx_DV). In einem Ausführungsbeispiel ist das DV oder RX_DV Signal mit einem Carrier-Sense-Signal (CRS) gemultiplext (CRS/DV oder CRS/RX_DV). Vorzugsweise wird das Slave-Gerät 2 auf der Basis eines PLL in dem Slave-Gerät 2 anhand des empfangenen analogen CRX/RX_DV Signals synchronisiert.

Vorzugsweise weist das geprüfte Feld zusätzlich ein Feld für eine virtuelle Datenverbindung auf. In diesem Feld für die virtuelle Datenverbindung werden die mit der virtuellen Datenschnittstelle 18 oder 28 kommunizierten Daten zwischen den beiden Ethernet-Schnittstellen 11 und 21 übertragen. So werden die an der virtuellen Datenschnittstelle 18 oder 28 eingehenden UART, SPI oder I2C-Daten in der Kommunikationssteuerschnittstelle 12 oder 22 in das Feld für die virtuelle Datenverbindung geschrieben. Der eingehende UART, SPI oder I2C-Datenstrom wird dabei in kleine Übertragungseinheiten unterteilt, die in das Feld für die virtuelle Datenverbindung passen, so dass der UART, SPI oder I2C-Datenstrom in nacheinander folgenden Übertragungspaketen übertragen werden kann. Auf der anderen Seite werden die Felder für die virtuelle Datenverbindung der an der Ethernet-Schnittstelle 11 oder 21 empfangenen Übertragungspakete in dem Kommunikationssteuermittel 12 oder 22 ausgelesen und zu einem UART, SPI oder I2C-Datenstrom zusammengefügt und an die virtuelle Datenschnittstelle 18 oder 28 gegeben. Das Zusammenfügen zu einem UART, SPI oder I2C-Datenstrom kann alternativ auch in der virtuellen Datenschnittstelle 18 oder 28 realisiert werden.

Vorzugsweise ist das INFO Feld 1 Byte, das DATA Feld 12 Byte, das CONTR Feld 2 Byte und das VCL Feld 1 Byte groß.

Das so beschriebene Übertragungspaket aus Fig. 5 bietet somit einen optimalen Kompromiss zwischen maximaler Übertragungskapazität und kleiner Synchronisierungszyklen und erlaubt zusätzlich noch eine virtuelle UART, SPI oder I2C-Datenverbindung über die EthernetSchnittstelle zu realisieren.

In dem Ausführungsbeispiel in Fig. 3 und 4 bestand das Master-Slave-System ohne Beschränkung der Erfindung aus einem Master-Gerät 1 und nur einem Slave-Gerät 2. Es ist allerdings auch möglich, das Master-Gerät 1 mit mindestens zwei Slave-Geräten 2 zu verbinden. Hier gibt es nun grob zwei mögliche Anordnungen: eine Line- oder Kreisanordnung oder eine Sternanordnung.

Fig. 6 und Fig. 7 zeigt ein Ausführungsbeispiel für eine Line-Anordnung mit zwei Slave-Geräten 2 und 2'. In der Line-Anordnung werden die Slave-Geräte 2 und 2' seriell, auch als hintereinander bezeichnet, mit dem Master-Gerät 1 verbunden. Dazu ist das erste Slave-Gerät 2 in der Kette mit einer ersten Ethernet-Schnittstelle mit dem Mater-Gerät 1 und mit einer zweiten Ethernet-Schnittstelle mit dem zweiten Slave-Gerät 2' verbunden. Die erste und zweite Ethernet-Schnittstellen des ersten Slave-Geräts 2 sind dabei miteinander verbunden, so dass das zweite Slave-Gerät 2' die gleichen Signale wie das erste Slave-Gerät 2 sieht. Diese Anordnung kann auf eine beliebige Anzahl an Slave-Geräten erhöht werden, sofern das Übertragungsformat diese Anzahl von Slave-Geräten in einer Line-Anordnung unterstützt. Während die in der Mitte angeordneten Slave-Geräte 2 zwei Ethernet-Schnittstellen benötigen, würde das Master-Gerät 1 und das letzte Slave-Gerät 2' in der Reihe auch mit einer Ethernet-Schnittstelle auskommen. Allerdings ist es vorteilhaft, die Master- und Slave-Geräte 1 und 2 identisch auszubilden und die Master und Slave-Eigenschaft durch einen Schalter zu realisieren. Fig. 7 zeigt nun ein Ausführungsbeispiel des Übertragungsformats für eine eindeutige Zuordnung der Übertragungspakete zu dem jeweiligen Slave-Gerät 2 oder 2'. Hierzu wird ein Zeitmultiplexverfahren verwendet, in dem jedem Slave-Gerät 2 und 2' ein eigener Zeitschlitz zugeordnet wird. Somit werden die Mastertelegramme MT1 an das erste Slave-Gerät 2 in einem ersten Zeitschlitz und die die Mastertelegramme MT2 an das zweite Slave-Gerät 2' in einem zweiten Zeitschlitz übertragen. In dem zweiten Kanal werden in den entsprechenden ersten und zweiten Zeitschlitzen die Slavetelegramme ST1 und ST2 von dem ersten und zweiten Slave-Gerät 2 und 2' an das Master-Gerät 1 geschickt. Die Anzahl der gleichzeitig in einer Reihe mit dem Master-Gerät 1 verbindbaren Slave-Geräte 2 hängt von der Größe der Übertragungspakete, der Übertragungsgeschwindigkeit und Länge des Synchronisierungszyklus TC ab. Bei einer Übertragungsgeschwindigkeit von 100 Mbit/s und einer Größe des Übertragungspakets von 18 Byte dauert die Übertragung eines Übertragungspakets weniger als 1,5 µs. Somit könnte bei einem Synchronisierungszyklus TC von 32 µs bis zu 21 Slave-Geräte 2 mit einem Master-Gerät 1 in Reihe verbunden werden.

Eine Kreis-Anordnung unterscheidet sich zu der Line-Anordnung nur dadurch, dass das letzte Slave-Gerät 2' in der Reihe wieder mit dem Master-Gerät 1 verbunden wird.

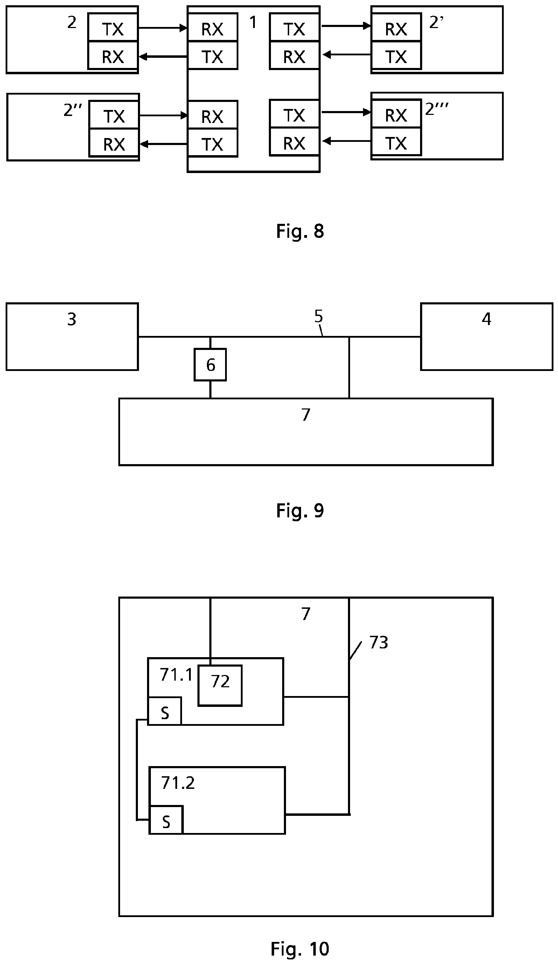

In einer Stern-Anordnung weist das Master-Gerät 1 eine Mehrzahl von Ethernet-Schnittstellen auf, die jeweils mit nur einem Slave-Gerät 2 verbunden sind. Die Anzahl der Slave-Geräte 2 ist somit nicht mehr durch das Übertragungsformat begrenzt, aber durch die Anzahl der an dem Master-Gerät 1 verfügbaren Ethernet-Schnittstellen bzw. der Kapazität des Master-Geräts 1 der gleichzeitigen Verarbeitung von Slave-Geräten 2. Gleichzeitig hat diese Anordnung den Vorteil, dass die Mastertelegramme und die Slavetelegramme zwischen dem Master-Gerät 1 und jedem Slave-Gerät 2 gleichzeitig ausgetauscht werden können, was für die synchrone Steuerung der Slave-Geräte 2 einfacher und besser ist. Fig. 8 zeigt ein solches Ausführungsbeispiels eines Master-Slave-Systems mit vier Slave-Geräten 2, 2', 2" und 2"', die in einer Stern-Anordnung mit dem Master-Gerät 1 verbunden sind.

Fig. 9 zeigt nun eine Anwendung eines solchen Slave-Master-Systems 7 in einem elektrischen System mit einem aktiven Filter. Das elektrische System weist eine Stromquelle 3, eine Stromleitung 5, eine Last 4 und einen aktiven Filter auf. Die Stromleitung 5 verbindet die Stromquelle 3 mit der Last 4. Es kann sich sowohl um ein ein, drei oder vier phasiges Wechselstromsystem als auch um ein Gleichspannungssystem handeln. Der aktive Filter wird durch die Messvorrichtung 6 und das Master-Slave-System 7 gebildet, wobei die Messvorrichtung 6 auch in dem Master-Slave-System 7 integriert sein kann. Die Messvorrichtung 6 misst Störströme auf der Stromleitung 5 und das Master-Slave-System 7 erzeugt in Abhängigkeit der gemessenen Störströme die entsprechenden Filterströme, um die Störströme auszugleichen. Während in dem gezeigten Ausführungsbeispiel wird die Messvorrichtung 6 netzseitig angeordnet. In einem alternativen Ausführungsbeispiel ist es auch möglich, die Messvorrichtung 6 lastseitig anzuordnen, so dass der Regelausgang des aktiven Filters 7 zwischen der Messvorrichtung 6 und dem Netz 3 angeordnet ist.

Fig. 10 zeigt ein einfaches Beispiel für ein Master-Slave-System 7 in Fig. 9. Das Master-Slave-System 7 weist ein Master-Gerät 71.1 und Slave-Gerät 71.2 auf, wie es auch in Fig. 3 beschrieben wurde. Die Ausgänge 73 des Master-Geräts 71.1 und des Slave-Geräts 71.2 sind mit der Stromleitung 5 verbunden. Sowohl das Master-Gerät 71.1 als auch das Slave-Gerät 71.2 haben die Funktion eines Energieausgabegeräts zur Erzeugung eines bestimmten Stromsignals mit einem bestimmten zeitlichen Signal- und Energieverlauf. Das Master-Gerät 71.1 weist zusätzlich ein Steuermittel 72 auf, das in Abhängigkeit von den gemessenen Störströmen, das Master-Gerät 71.1 und das Slave-Gerät 71.2 so ansteuert, dass die Summe der Ausgabe des Master-Geräts 71.1 und des Slave-Geräts 71.2 die gemessenen Störströme auslöscht und somit einen aktiven Filter ausbildet. Somit können hohe Störströme auch mit zwei kleineren Energieausgabegeräten zusammen ausgeglichen werden, anstatt ein großes Energieausgabegerät mit großen und teuren Komponenten verwenden zu müssen.

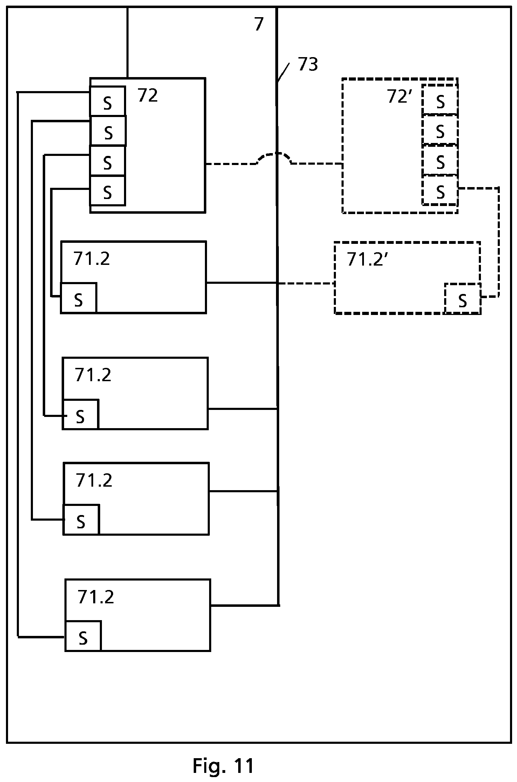

Fig. 11 zeigt ein zweites Ausführungsbeispiel mit vier Slave-Geräten 71.2 und einem Master-Gerät 72. Vorzugsweise sind die vier Slave-Geräte 71.2 mit dem Master-Gerät 72 in einer Sternanordnung verbunden. In diesem Ausführungsbeispiel haben nur die vier Slave-Geräte 71.2 die Funktion der oben beschriebenen Energieausgabegeräte, deren Ausgänge 73 mit der Stromleitung 5 verbunden sind. Somit lässt sich die zu erzeugenden Gegenströme eines aktiven Filters in vier zu erzeugende Unterströme mit jeweils entsprechend niedrigeren Energien aufteilen. Das Mastergerät 72 erfüllt die Funktion des oben beschriebenen Steuermittels, das die synchrone Ausgabe der Energieausgabe der vier Slave-Geräte 71.2 in Abhängigkeit von den gemessenen Störströmen steuert. In diesem Ausführungsbeispiel hat das Steuermittel 72 vier Ethernet-Anschlüsse S für die Verbindung von bis zu vier Energieausgabe-Geräten 71.2. Allerdings können auch weniger Energieausgabe-Geräten 71.2 als zur Verfügung stehende Ethernet-Schnittstellen S an das Master-Gerät 72 angeschlossen werden und so der zu erzeugende Gegenstrom durch weniger Slave-Geräte bzw. Energieausgabegeräte 71.2 geteilt werden. Die Anzahl der möglichen an dem Master-Gerät 72 anzuschließenden Slave-Geräte 71.2 kann ebenfalls variieren. Sollte mehr als die an einem Master-Gerät 72 anzuschließenden Slave-Geräte 71.2 verwendet werden, so kann ein zweites Master-Gerät 72' parallel zu dem ersten Master-Gerät 72 angeschlossen werden, so dass an dem zweiten Master-Gerät 72' weitere Energieausgabe-Geräte 71.2' angeschlossen werden können (in Fig. 11 gestrichelt gezeichnet). Dabei wird das zweite Steuermittel 72' als Slave mit dem ersten Steuermittel 72 als Master synchronisiert. Das zweite Steuermittel 72' wirkt dagegen als Master gegenüber den daran angeschlossenen Energieausgabegeräten. Eine solche Anordnung wird auch als Multi-Cabinet- Anordnung bezeichnet.

Die hier beschriebene Anwendung ist ein aktiver Filter. Eine solche Master-Slave-Anordnung kann aber auch andere elektrische Energieausgaben mit hohen Strömen, z.B. eine PWM-Energieversorgung eines Antriebs, realisieren. Durch das Aufteilen der zu erzeugenden Ströme in eine Mehrzahl von kleineren Energieausgabevorrichtungen können die zu verwendeten Komponenten verkleinert werden. Allerdings sind für solche Anwendungen eine hohe Synchronisierungsfrequenz notwendig, so dass diese Anwendungen besonders vorteilhaft für die gegenwärtige Erfindung ist.

## Patentansprüche

1. Gerät aufweisend:
Ethernetschnittstelle (11, 21) mit einer theoretischen Übertragungsgeschwindigkeit von 100 Mbit/s oder schneller;
Kommunikationssteuermittel (12, 22) zum zyklischen Kommunizieren von Synchronisierungssignalen und Steuerbefehlen über die Ethernetschnittstelle;
Synchronisierungsmittel (14, 24) zur Synchronisierung des Geräts mit einem weiteren Gerät auf der Basis der zyklisch kommunizierten Synchronisierungssignale;
**dadurch gekennzeichnet, dass**
das Übertragungsformat, das in der Ethernetschnittstelle (11, 21) für die zyklische Kommunikation der Synchronisierungssignale und der Steuerbefehle verwendet wird, ein Übertragungspaket mit einer Größe kleiner 35 Bytes aufweist.

2. Gerät nach Anspruch 1, wobei
das Übertragungspaket kein Feld für die MAC Zieladresse und die MAC Ursprungsadresse aufweist und
die Übertragungspakete mit den Synchronisierungssignalen zyklisch mit einer festen Zyklusperiode (TC) kommuniziert werden.

3. Gerät nach Anspruch 1 oder 2, wobei das Gerät mit einer Mehrzahl von weiteren Geräten synchronisiert wird, wobei die Übertragungspakete für unterschiedliche weitere Geräte in unterschiedlichen festen Zeitschlitzen innerhalb der festen Zyklusperiode (TC) mit einem TDMA Verfahren kommuniziert werden.

4. Gerät nach einem der vorigen Ansprüche, wobei das Übertragungspaket einen Streamstartbegrenzer (SSD), ein Rahmenfeld aufweist, wobei das Rahmenfeld ein geprüftes Feld und ein Prüffeld (CRC8) mit einer Prüfsumme des geprüften Felds aufweist.

5. Gerät nach dem vorigen Anspruch, wobei der Streamstartbegrenzer (SSD) 1 Byte, das geprüfte Feld 16 Byte und das Prüffeld (CRC8) 1 Byte lang sind.

6. Gerät nach Anspruch 4 oder 5, wobei das geprüfte Feld die Steuerbefehle enthält.

7. Gerät nach einem der Ansprüche 4 bis 6, wobei das geprüfte Feld ein Feld für eine virtuelle Datenverbindung (VCL) aufweist, wobei das Gerät eine virtuelle Datenverbindungsschnittstelle (18, 28) zum Eingeben und/oder Ausgeben von Daten im Protokollformat von UART, SPI oder I2C aufweist, wobei das Kommunikationssteuermittel (12, 22) und die virtuelle Datenverbindungsschnittstelle (18, 28) zusammen ausgebildet sind,
die an der virtuellen Datenverbindungsschnittstelle (18, 28) eingegebenen Daten aus dem UART, SPI oder I2C Protokollformat auszulesen und in das Feld für die virtuelle Datenverbindung (VCL) aufeinanderfolgender Übertragungspakete zu schreiben, und/oder
Daten des Felds für die virtuelle Datenverbindung (VCL) der an der Ethernetschnittstelle (11, 21) empfangenen Übertragungspakete auszulesen und die ausgelesenen Daten an der virtuelle Datenverbindungsschnittstelle (18, 28) im UART, SPI oder I2C Protokollformat auszugeben.

8. Gerät nach dem vorigen Anspruch, wobei das geprüfte Feld ein erstes Feld (INFO) mit Informationen zu dem Übertragungspaket, ein zweites Feld (DATA) mit Steuerdaten, ein drittes Feld (CONTR) mit anwendungsspezifischen Informationen zu der Steuerung und/oder der virtuellen Datenverbindung und das Feld für die virtuelle Datenverbindung (VCL) aufweist, wobei das erste Feld 1 Byte, das zweite Feld (DATA) 12 Byte, das dritte Feld (CONTR) 2 Byte und das Feld für die virtuelle Datenverbindung (VCL) 1 Byte lang ist.

9. Gerät nach einem der vorigen Ansprüche, wobei
das Gerät ein Slave-Gerät (2) ist und das weitere Gerät (1) ein Master-Gerät ist;
die Ethernetschnittstelle (11) zum zyklischen Empfangen der Synchronisierungssignalen und von Steuerbefehlen ausgebildet ist;
die Synchronisierungsmittel (14) zur Synchronisierung des Geräts mit dem weiteren Gerät auf der Basis der zyklisch empfangenen Synchronisierungssignale ausgebildet ist; und
das Gerät weiter Steuermittel (16) zur mit dem weiteren Gerät synchronen Steuerung des Geräts auf der Basis der zyklisch empfangenen Steuerbefehle aufweist.

10. Gerät nach dem vorigen Anspruch, wobei das Synchronisierungssignal in dem Übertragungspaket ein analoges Signal des Übertragungspakets ist, wobei das Synchronisierungsmittel (14) einen Phasenregelkreis aufweist, der das Gerät mit dem analogen Synchronisierungssignal synchronisiert.

11. Gerät nach dem vorigen Anspruch, wobei das analoge Synchronisierungssignal das Data Valid Signal ist.

12. Gerät nach einem der Ansprüche 9 bis 11 aufweisend eine elektrische Energieausgabevorrichtung (71.1, 71.2), deren elektrische Ausgabeenergie in Abhängigkeit von den empfangenen Steuerbefehlen synchron mit dem weiteren Gerät gesteuert wird.

13. Gerät nach einem der Ansprüche 1 bis 8, wobei
das Gerät ein Master-Gerät ist und das weitere Gerät ein Slave-Gerät ist;
die Ethernetschnittstelle zum zyklischen Senden der Synchronisierungssignalen und von Steuerbefehlen ausgebildet ist;
die Synchronisierungsmittel zur Synchronisierung des Geräts mit dem weiteren Gerät auf der Basis der zyklisch empfangenen Synchronisierungssignale ausgebildet ist; und
das Gerät weiter Steuermittel zur mit dem weiteren Gerät synchronen Steuerung des Geräts auf der Basis der zyklisch empfangenen Steuerbefehle aufweist.

14. Master-Slave System aufweisend ein Mastergerät (1, 71.1, 72, 72') nach Anspruch 13 und mindestens ein Slave-Gerät (2, 2', 2", 2"', 71.2) nach einem der Ansprüche 9 bis 12 zum Steuern des mindestens einen Slave-Geräts (2, 2', 2", 2"', 71.2) synchron mit dem Master-Gerät (1, 71.1, 72, 72').

15. Master-Slave System nach Anspruch 14 ausgebildet Leitungsstörungen durch aktive Filterung zu dämpfen aufweisend:
eine Messvorrichtung (6) zur Messung von elektrischen Strömen oder Spannungen auf mindestens einer Stromleitung (5), und
eine Filtersteuervorrichtung (72) zum synchronen Steuern von mindestens zweier Energieausgabegeräte (71.1, 71.2) zur aktiven Filterung der Stromleitung (5) in Abhängigkeit der gemessenen Ströme oder Spannungen,
wobei die mindestens zwei Energieausgabegeräte (71.1, 71.2) durch mindestens zwei Slave-Geräte (71.2) oder durch das mindestens eine Slave-Gerät (71.2) und das Master-Gerät (71.1) realisiert sind.
